# EUROPEAN PATENT SPECIFICATION

(11) **EP 2 660 139 B1**
(45) Date of publication and mention of the grant of the patent: **07.09.2016**
(21) Application number: 13165938.5
(22) Date of filing: 30.04.2013
(51) Int. Cl.: B62M 25/04, B62K 23/02

(54) **Gear positon detecting device and cycle computer**
Gangpositionserkennungsvorrichtung und Fahrradcomputer
Dispositif de détection de position d'engrenage et ordinateur de vélo

(30) Priority: 02.05.2012 JP 2012105060
(43) Date of publication of application: 06.11.2013
(73) Proprietor: CATEYE CO., LTD., Osaka-shi, Osaka 546-0041 (JP)
(72) Inventor: Tanaka, Hiroshi, Osaka, 546-0041 (JP)
(74) Representative: Prüfer & Partner mbB Patentanwälte · Rechtsanwälte

(56) References cited:
- WO-A1-91/17078
- JP-A- 2011 136 655
- US-B1- 6 569 045

## Description

### BACKGROUND OF THE INVENTION

### Field of the Invention

The present invention relates to a gear position detecting device and a cycle computer, and particularly a gear position detecting device and a cycle computer that detect a sprocket that is being used, i.e., a gear position, of a bicycle with a shift cable, and display the gear position.

### Description of the Background Art

Pantograph-type external transmission devices for bicycles are conventionally known. This type of transmission device drives a pantograph by displacing a shift cable, which causes switching of sprockets with which a chain is engaged. Gears consist of a plurality of sprockets. A total amount of displacement of the shift cable is determined by the number of sprockets, the spacing between adjacent sprockets, and the structure of a device for winding up the shift cable, i.e., an shift lever. The number of gear positions is determined by the number of sprockets.

Detection of a gear position by sensing an amount of the above-described displacement of the shift cable has also been conventionally performed. The document US6369045 B1 discloses a gear position detecting device according to the preamble of claim 1 and a cycle computer according to the preamble of claim 4. Japanese Patent Laying-Open No. 2001-187594 (Patent Document 1), for example, discloses providing a reference member 18 capable of moving with a cable 10, and providing a plurality of pads 23b within a shell 14 to detect a position of reference member 18. A gear position of a bicycle is detected based on the position of reference member 18, and the detected result is displayed on an electronic display device 12.

Japanese Patent Laying-Open No. 2011-136655 (Patent Document 2) discloses providing a connector 52 including a permanent magnet 44 between an operation-side cable 40A and a gear-side cable 40B, and detecting a gear position by sensing displacement of permanent magnet 44 with non-contact sensors 36A, 36B. Appropriate control of auxiliary mechanical power is performed based on the detected gear position.

Japanese Patent Laying-Open No. 7-101375 (Patent Document 3) discloses attaching an indicator 11a to a shift cable 4, and causing indicator 11a to move within a transparent cylindrical body 8 along with displacement of shift cable 4, thereby displaying a gear position of a bicycle.

Document WO 91/17078 A1 discloses a gear shifting device that detects a gear position of a bicycle with a shift cable, comprising: a sensor device that senses an amount of displacement of said shift cable, and a cycle computer that calculates a gear position corresponding to a sprocket being used, based on the amount of displacement of said shift cable sensed by said sensor device, said cycle computer having a function of converting a voltage drop across said variable resistor into a gear position of said bicycle, wherein said sensor device has a housing, said variable resistor accommodated in said housing, and an arm that is attached to said variable resistor, has an engaging portion with which said shift cable is brought into engagement, and moves relative to said housing along with displacement of said shift cable.

Although the gear position of a bicycle can be detected by sensing displacement of the shift cable as described above, the amount of displacement of the shift cable with respect to each gear position varies for each type of transmission devices.

While the devices described in Patent Documents 1 to 3 serve effectively for specific gears, they cannot be applied to different types of gears.

Specifically, in the device described in Patent Document 1, the positions of pads 23b corresponding to various gear positions are fixed, and therefore, the device cannot be applied to different types of gears.

The device described in Patent Document 2 requires connecting operation-side cable 40A and gear-side cable 40B separated from each other with connector 52, and does not contemplate removal thereof. This device cannot therefore be applied to different types of gears.

In the device described in Patent Document 3, the number of gear position indications 8a provided on the transparent cylindrical body 8, and the spacing between adjacent indications 8a are fixed. Therefore, the device cannot be applied to different types of gears, that is, gears with a different number of gear positions or gears with a different sprocket spacing.

As described above, each of the devices described in Patent Documents 1 to 3 does not contemplate attaching and detaching the gear position detecting device to and from a plurality of bicycles, and is used solely for specific gears with the same number of gear positions or with the same sprocket spacing.

### SUMMARY OF THE INVENTION

An object of the present invention is to provide a gear position detecting device and a cycle computer that can be applied to gears that differ in type from one another.

A gear position detecting device according to an aspect of the present invention in claim 1 that detects a gear position of a bicycle with a shift cable and displays the gear position includes a sensor device that can be attached to and detached from a bicycle, and senses an amount of displacement of the shift cable with a variable resistor, and a cycle computer that can be attached to and detached from the bicycle, and calculates a gear position corresponding to a sprocket being used, based on the amount of displacement of the shift cable sensed by the sensor device, and displays the gear position. The cycle computer has a function of converting a voltage drop across the variable resistor into a gear position of the bicycle.

In accordance with one embodiment, in the gear position detecting device described above, the sensor device has a housing, the variable resistor accommodated in the housing, and an arm that is attached to the variable resistor, has an engaging portion with which the shift cable is brought into engagement, and moves relative to the housing along with displacement of the shift cable.

In accordance with one embodiment, in the gear position detecting device described above, the cycle computer can display the gear position corresponding to the sprocket being used, and at least one of a running speed, a running time, a running distance, an average speed, and a maximum speed of the bicycle, and time.

A cycle computer according to the present invention in claim 4 that can be attached to and detached from a bicycle, and detects a gear position of a bicycle with a shift cable and displays the gear position, has a function of converting, into a gear position of the bicycle, a voltage drop across a variable resistor in a sensor device that can be attached to and detached from the bicycle, and calculates a gear position corresponding to a sprocket being used, based on an amount of displacement of the shift cable sensed by the variable resistor, and displays the gear position.

According to the present invention, the gear position detecting device can be applied to different types of gears, i.e., gears with a different number of gear positions or gears with a different sprocket spacing.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a bicycle to which a gear position detecting device according to one embodiment of the invention is attached;
Fig. 2 is a top view showing a cycle computer constituting the gear position detecting device according to one embodiment of the invention;
Fig. 3 is a diagram showing the cycle computer shown in Fig. 2 when viewed from a direction indicated by arrow III in Fig. 2;
Fig. 4 is a rear view of the cycle computer shown in Fig. 2;
Fig. 5 is a diagram showing the cycle computer shown in Figs. 2 and 3 before being attached to a fixing device;
Fig. 6 is a diagram showing the cycle computer shown in Figs. 2 and 3 after being attached to the fixing device;
Fig. 7 is a diagram showing a sensor device included in the gear position detecting device according to one embodiment of the invention;
Fig. 8 is a diagram showing an equivalent circuit of the sensor device shown in Fig. 7;
Fig. 9 is a diagram showing a relationship between sprocket voltage and distance of movement of an arm in the sensor device included in the gear position detecting device according to one embodiment of the invention; and
Fig. 10 is a diagram showing a conversion table for use in converting a sprocket voltage to a gear position.

### DESCRIPTION OF THE PREFERRED EMBODIMENTS

An embodiment of the present invention will be described hereinafter. Identical or corresponding parts are denoted by identical reference characters, and description thereof may not be repeated.

In the embodiment described below, when reference is made to a number, an amount, or the like, the scope of the present invention is not to be limited by that number, amount, or the like, unless otherwise stated. In the following embodiment, various structural elements are not necessarily indispensable for the present invention, unless otherwise stated.

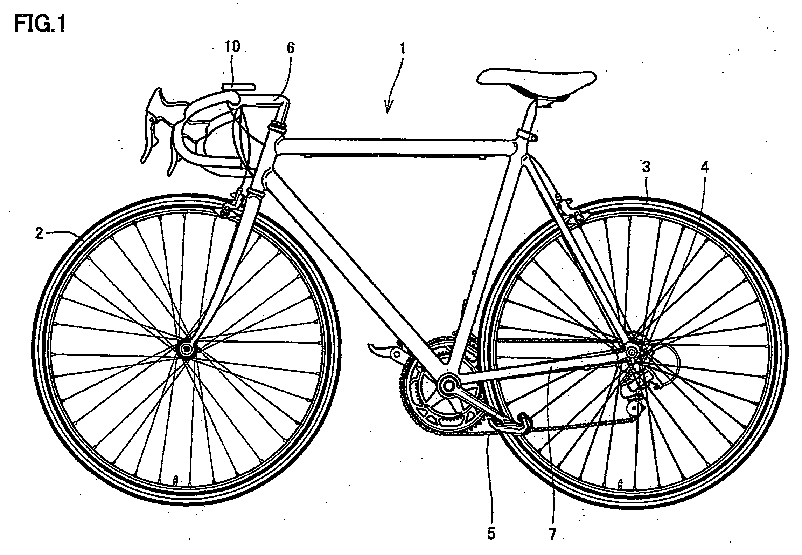

Fig. 1 is a diagram showing a bicycle to which a gear position detecting device according to one embodiment of the invention is attached. Referring to Fig. 1, a bicycle 1 includes a front wheel 2 and a rear wheel 3, a group of sprockets 4, a chain 5, a stem 6, and a chain stay 7.

Group of sprockets 4 are made of a plurality of sprockets. Chain 5 is brought into selective engagement with one of the plurality of sprockets. Selection of engagement between chain 5 and group of sprockets 4 is made by operating an operation lever (not shown). By operating the operation lever, a below-described shift cable 40 (not shown in Fig. 1) is displaced, which changes selective engagement between chain 5 and group of sprockets 4. This changes a gear position.

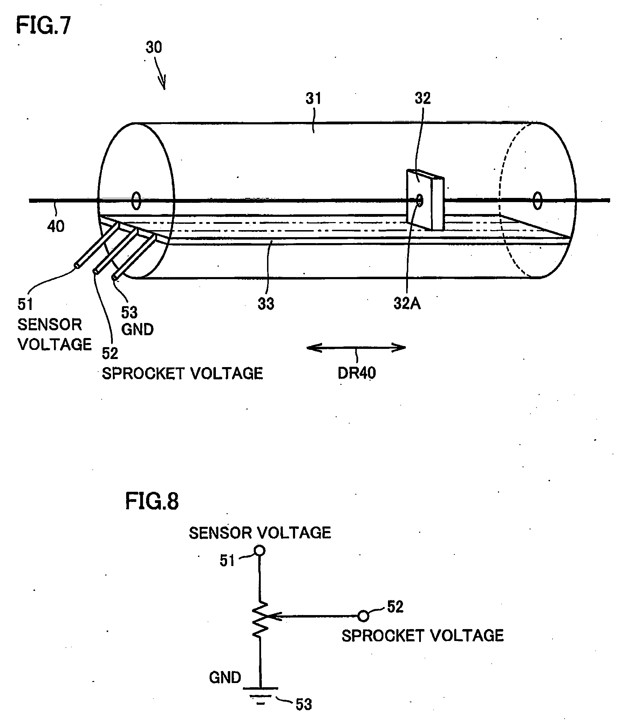

A cycle computer 10 is used to indicate a current gear position to a bicycle rider. The gear position detecting device according to this embodiment includes cycle computer 10 shown in Figs. 1 to 6 and a sensor device 30 shown in Fig. 7.

The current gear position is displayed on cycle computer 10. Cycle computer 10 is attached onto the bicycle (onto stem 6, for example), allowing the rider to check the displayed contents. Cycle computer 10 can be attached to and detached from the bicycle.

A gear position is detected by below-described sensor device 30 (not shown in Fig. 1). The sensor device senses an amount of displacement of the shift cable. The sensor device is attached somewhere along the route of the shift cable. The sensor device is attached to chain stay 7, for example. The sensor device can be attached to and detached from the bicycle. Cycle computer 10 calculates a gear position based on the amount of displacement of the shift cable sensed by the sensor device, and displays the calculated gear position.

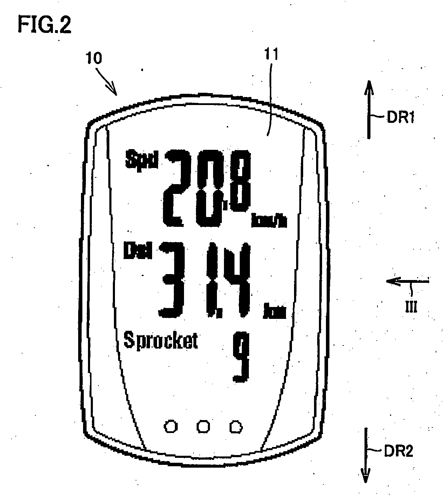

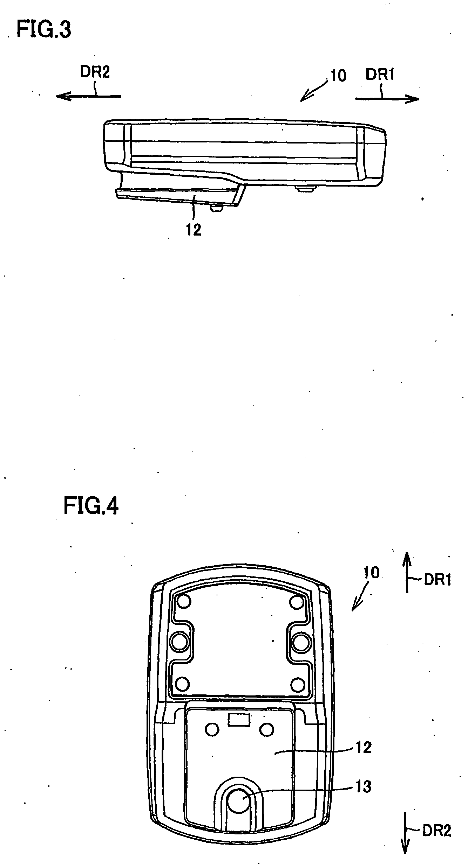

Fig. 2 is a top view showing cycle computer 10, and Fig. 3 is a diagram showing cycle computer 10 shown in Fig. 2 when viewed from a direction indicated by arrow III in Fig. 2. Fig. 4 is a rear view of cycle computer 10.

Referring to Figs. 2 to 4, cycle computer 10 includes a display portion 11 for displaying various items of information, an engaging portion 12 for engagement with a below-described fixing device 20, and a switch button 13 provided on a rear face.

In each of Figs. 2 to 4, arrow DR1 corresponds to a forward direction of the bicycle, and arrow DR2 corresponds to a rear direction of the bicycle. Display portion 11 can display, in addition to the gear position, information such as, for example, a running speed, a running time, a running distance, an average speed, and a maximum speed of the bicycle, and time, etc. These items of information may or may not be displayed simultaneously on display portion 11. When the plurality of items of information are not displayed simultaneously on display portion 11, display states are switched by operating the switch provided on cycle computer 10. Specifically, displayed states are switched by tilting cycle computer 10 by pressing it from above, thereby pushing in switch button 13 on the rear face. As displayed states are sequentially switched, the bicycle driver can sequentially check various items of information.

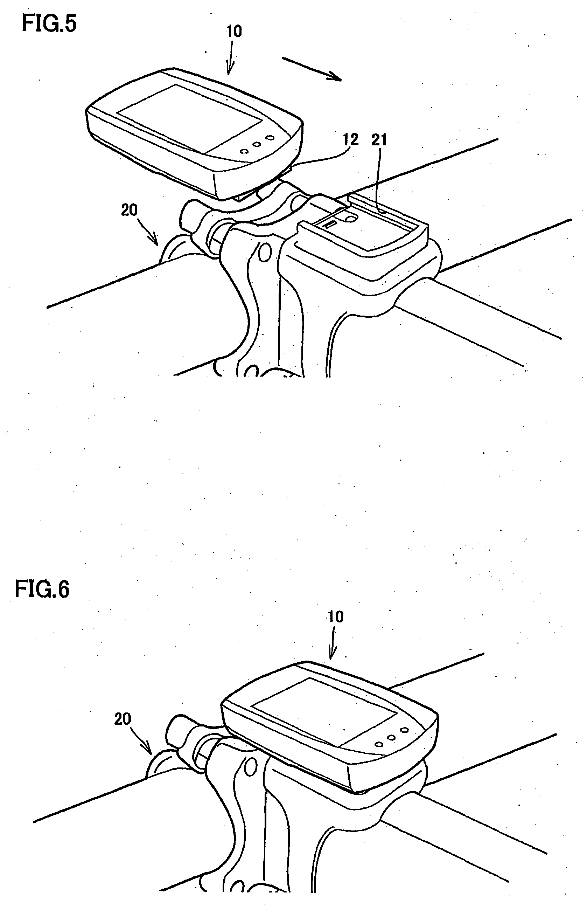

Fig. 5 is a diagram showing cycle computer 10 before being attached to the fixing device, and Fig. 6 is a diagram showing cycle computer 10 after being attached to the fixing device.

Referring to Figs. 5 and 6, cycle computer 10 is caused to slide in a direction of the arrow shown in Fig. 5, bringing engaging portion 12 of cycle computer 10 into engagement with an engaging portion 21 of fixing device 20. Cycle computer 10 is thus attached to fixing device 20. The specific form of fixing device 20 can be modified as appropriate.

Fixing device 20 may be attached to a bar (e.g., the stem) extending in the forward and rear directions of the bicycle, or may be attached to a bar (e.g., a handle bar) extending in a lateral direction of the bicycle.

As described above with Figs. 5 and 6, cycle computer 10 is detachably attached to fixing device 20. Fixing device 20 is also detachably attached to the bicycle. In other words, cycle computer 10 is attachably and detachably provided on the bicycle.

A structure of sensor device 30 will be described next with Figs. 7 and 8. Sensor device 30 includes a variable resistor 33 that converts an amount of movement of the shift cable to voltage, and, as shown in Fig. 7, has a housing 31 and an arm 32, which is attached to variable resistor 33 and moves relative to housing 31 along with displacement of shift cable 40. Sensor device 30 includes a sensed voltage terminal 51, a sprocket voltage terminal 52, and a GND terminal 53. A constant voltage is applied across sensed voltage terminal 51 and GND terminal 53. Sprocket voltage terminal 52 senses a sprocket voltage corresponding to the amount of movement of arm 32. The sprocket voltage appearing in sensor device 30 may be sensed by cycle computer 10 via a cable (not shown) or by wireless communication via a transmitter. Cycle computer 10 senses an amount of displacement of shift cable 40 based on the sprocket voltage from sensor device 30, and calculates a current gear position based on the amount of displacement of shift cable 40.

Housing 31 is fixed to the bicycle (e.g., chain stay 7). In the example shown in Fig. 7, housing 31 is made of a cylindrical member.

Arm 32 has an engaging portion 32A with which shift cable 40 is brought into engagement. This allows arm 32 to move along with displacement of shift cable 40.

In the example shown in Fig. 7, engaging portion 32A is made of a hole formed in arm 32. The diameter of shift cable 40 is substantially uniform (e.g., approximately ϕ 1.2 mm), irrespective of the type of gears. By forming in advance a hole having a diameter slightly smaller than the substantially uniform diameter in a flexible member, the shift cable and arm 32 can be engaged with each other.

Housing 31 is not limited to the form shown in Fig. 7, and may be made of, for example, a cylindrical member having the shape of a quadrangular prism, instead of the cylindrical shape.

Similarly, engaging portion 32A is not limited to the form shown in Fig. 7, and may be provided by, for example, forming a groove in arm 32. Alternatively, in addition to a hole or a groove, a separate member for fixing arm 32 and shift cable 40 to each other may also be provided.

In the gear position detecting device according to this embodiment, cycle computer 10 and sensor device 30 are provided attachably and detachably on a bicycle. In other words, the gear position detecting device according to this embodiment can be shared by a plurality of bicycles.

When the gear position detecting device is shared by a plurality of bicycles, the fact that the type of gears varies for each bicycle must be taken into consideration. Specifically, when the gear position detecting device is detached from one bicycle and attached to a different bicycle, if the type of gears is different between these bicycles, it is indispensable that a calibration be performed to determine a relationship between a sprocket voltage appearing in sensor device 30 and a gear position corresponding to a sprocket being used. In this embodiment, cycle computer 10 has such a calibration function.

Note that sensor device 30 can be detached by releasing the engagement between shift cable 40 and arm 32, and connecting shift cable 40 to the gears without passing through sensor device 30. Sensor device 30 can be attached by releasing the connection between shift cable 40 and the gears, placing sensor device 30 along the route of shift cable 40, bringing arm 32 and shift cable 40 into engagement with each other, and then connecting shift cable 40 to the gears again.

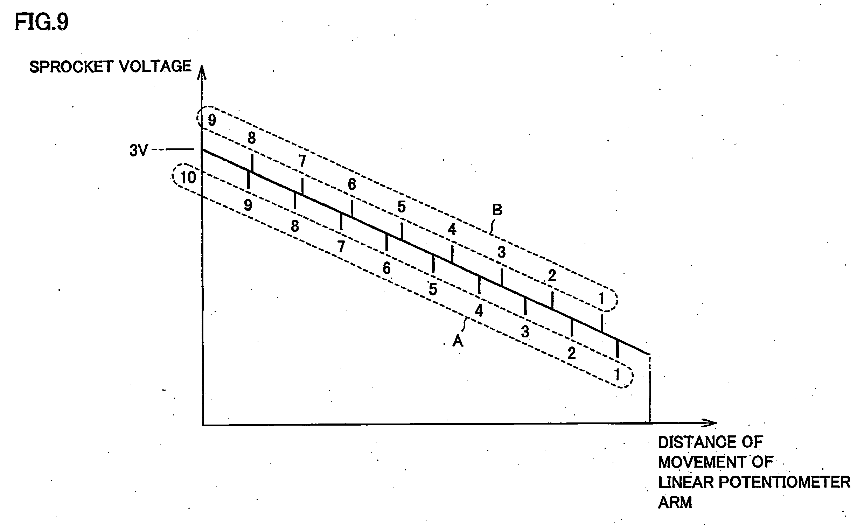

Fig. 9 is a diagram for explaining the calibration described above, showing a relationship between distance of movement of arm 32 in sensor device 30 and sensed voltage obtained by sensor device 30. The sprocket being used changes along with movement of arm 32. Here, sprockets are assigned numbers 1, 2, ... in descending order as the number of teeth becomes smaller.

In this embodiment, a calibration is performed by the following operation. First, the operation lever is operated to use sprocket 1, and causes cycle computer 10 to recognize the use of sprocket 1.

Cycle computer 10 reads a sprocket voltage appearing at sprocket voltage terminal 52 of sensor device 30, and stores a voltage V1 corresponding to sprocket 1. Similarly, the operation lever is operated to cause cycle computer 10 to store a voltage V2 corresponding to sprocket 2, as well as voltages corresponding to other sprockets.

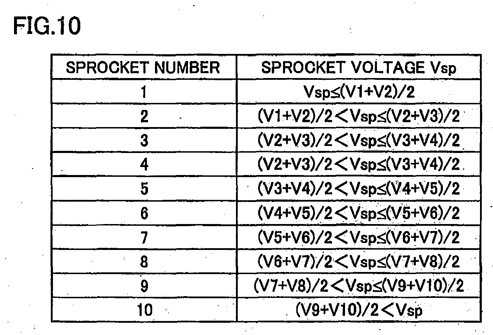

When the voltages corresponding to all of the sprockets have been stored, the calibration is finished. Once the calibration is finished, cycle computer 10 converts a sprocket voltage Vsp to a sprocket being used, i.e., a gear position, by using the table shown in Fig. 10. Fig. 10 shows a conversion rule for converting sprocket voltages Vsp to sprocket numbers. Fig. 10 shows the case where group of sprockets 4 includes 10 sprockets, i.e., the total number of gear positions is 10.

Note that the table shown in Fig. 10 is an example of the case where a linear potentiometer is used as variable resistor 33.

Fig. 9 shows changes in the sprocket voltage (voltage output to sprocket voltage terminal 52) that changes along with movement of arm 32. An example is shown where a linear potentiometer is used as variable resistor 33, and the sprocket voltage changes linearly along with the movement of the arm. The numbers in the figure show that the sprocket being used changes from sprocket 1 to sprocket 2, ... along with the movement of the arm.

As shown in Fig. 9, when the gear position detecting device according to this embodiment is detached from a 10-speed gear (indicated by A in Fig. 8) and attached to a 9-speed gear (indicated by B in Fig. 8), for example, the sprocket voltage (voltage appearing at sprocket terminal 52) corresponding to each gear position changes.

In this manner, cycle computer 10 has the function of converting sprocket voltage Vsp detected by the linear potentiometer of sensor device 30 to a sprocket number, i.e., a gear position of a bicycle. Moreover, cycle computer 10 also has the calibration function to correct the conversion rule in accordance with the gears. In this way, even when the gear position detecting device is detached from a first bicycle and attached to a second bicycle with different gears, cycle computer 10 can display an accurate sprocket number in accordance with a gear-shifting operation.

Furthermore, in the gear position detecting device according to this embodiment, cycle computer 10 that displays information such as a running speed and the like is used to display a gear position, so that sensor device 30 may be placed anywhere along the route of the shift cable, and the sensor device itself may be invisible.

Furthermore, the gear position detecting device according to this embodiment can be utilized in detecting gear position(s) of any of, or both of front gears and rear gears.

Moreover, the conversion rule for converting sprocket voltages Vsp to sprocket numbers is not limited to the example shown in Fig. 10, and may be modified in accordance with characteristics of variable resistor 33, so as to prevent an erroneous conversion.

Although the present invention has been described and illustrated in detail, it is clearly understood that the same is by way of illustration and example only and is not to be taken by way of limitation, the scope of the present invention being interpreted by the terms of the appended claims.

## Claims

1. A gear position detecting device that detects a gear position of a bicycle with a shift cable (40) and displays the gear position, comprising:
a sensor device (30) that can be attached to and detached from said shift cable (40) of said bicycle, and senses an amount of displacement of said shift cable (40) with a variable resistor (33); and
a cycle computer (10) that can be attached to and detached from said bicycle, wherein said cycle computer (10) is adapted to calculate a gear position corresponding to a sprocket being used amongst a plurality of sprockets (4), based on the amount of displacement of said shift cable (40) sensed by said sensor device (30), and to display the gear position,
said cycle computer (10) is adapted to convert a voltage drop across said variable resistor (33) into a gear position of said bicycle,
wherein
said sensor device (30) has:
a housing (31);
said variable resistor (33) accommodated in said housing (31); and
an arm (32) that is attached to said variable resistor (33), has an engaging portion with which said shift cable (40) is brought into engagement, and moves relative to said housing (31) along with displacement of said shift cable (40);
**characterized in that**:
said cycle computer (10) has a calibration function; and
said calibration function comprises storing the respective voltage drop across said variable resistor (33) corresponding to each one of said plurality of sprockets (4).

2. The gear position detecting device according to claim 1, wherein
said cycle computer (10) can display:
the gear position corresponding to the sprocket being used; and
at least one of a running speed, a running time, a running distance, an average speed, and a maximum speed of said bicycle, and time.

3. The gear position detecting device according to claim 1, wherein
said sensor device (30) has:
a housing (31);
said variable resistor (33) accommodated in said housing (31); and
an arm (32) that is attached to said variable resistor (33), has an engaging portion with which said shift cable (40) is brought into engagement, and moves relative to said housing (31) along with displacement of said shift cable (40), and
said cycle computer (10) can display:
the gear position corresponding to the sprocket being used; and
at least one of a running speed, a running time, a running distance, an average speed, and a maximum speed of said bicycle, and time.

4. A cycle computer (10) that can be attached to and detached from a bicycle, wherein:
said cycle computer (10) is adapted to detect a gear position of a bicycle based on the amount of displacement of a shift cable (40) sensed by a variable resistor and to display the gear position, and
said cycle computer (10) is adapted to convert, into a gear position of said bicycle, a voltage drop across the variable resistor (33) in a sensor device (30) that can be attached to and detached from said shift cable (40) of said bicycle, and to calculate a gear position corresponding to a sprocket being used amongst a plurality of sprockets (4), based on an amount of displacement of said shift cable (40) sensed by said variable resistor (33), and to display the gear position;
**characterized in that**:
said cycle computer (10) has a calibration function; and
said calibration function comprises storing the respective voltage drop across said variable resistor (33) corresponding to each one of said plurality of sprockets (4).

## Patentansprüche

1. Erkennungsvorrichtung einer Gangstellung, welche eine Gangstellung eines Fahrrades mit einem Schaltzug (40) erkennt und die Gangstellung anzeigt, aufweisend:
eine Sensorvorrichtung (30), welche an den Schaltzug (40) des Fahrrades angebracht und von diesem gelöst werden kann, und ein Ausmaß der Verschiebung des Schaltzugs (40) mit einem variablen Resistor (33) erkennt; und
einen Fahrradcomputer (10), welcher am Fahrrad angebracht und von diesem gelöst werden kann, wobei der Fahrradcomputer (10) dazu angepasst ist, eine Gangstellung entsprechend einem Kettenrad zu berechnen, welches unter einer Vielzahl von Kettenrädern (4) verwendet wird, basierend auf dem Ausmaß der Verschiebung des Schaltzugs (40), welche durch die Sensorvorrichtung (30) gemessen worden ist, und um die Gangposition anzuzeigen,
wobei der Fahrradcomputer (10) dazu angepasst ist, einen Spannungsabfall am variablen Resistor (33) in eine Gangposition des Fahrrads umzuwandeln,
wobei
die Sensorvorrichtung (30) aufweist:
ein Gehäuse (31);
den variablen Resistor (33), welcher im Gehäuse (31) untergebracht ist; und
einen Arm (32), welcher am variablen Resistor (33) angebracht ist, einen Eingriffsabschnitt hat, mit welchem der Schaltzug (40) in Eingriff gebracht wird, und sich relativ zum Gehäuse (31) entlang mit Verschiebung des Schaltzugs (40) bewegt;
**dadurch gekennzeichnet, dass**:
der Fahrradcomputer (10) eine Kalibrierfunktion besitzt, und
die Kalibrierfunktion das Speichern des entsprechenden Spannungsabfalls am variablen Resistor (33) umfasst, entsprechend jedem der genannten Vielzahl von Kettenrädern (4).

2. Erkennungsvorrichtung einer Gangstellung gemäß Anspruch 1, wobei
der Fahrradcomputer (10) anzeigen kann:
die Gangposition entsprechend dem Kettenrad (4); und
wenigstens eine Größe aus: einer Fahrgeschwindigkeit, einer Fahrzeit, einer Fahrstrecke, einer Durchschnittsgeschwindigkeit und einer maximalen Geschwindigkeit des Fahrrads, und der Zeit.

3. Erkennungsvorrichtung einer Gangposition gemäß Anspruch 1, wobei
die Sensorvorrichtung (30) aufweist:
ein Gehäuse (31);
den variablen Resistor (33), welcher im Gehäuse (31) untergebracht ist; und
einen Arm (32), welcher am variablen Resistor (33) angebracht ist, einen Eingriffsabschnitt hat, mit welchem der Schaltzug (40) in Eingriff gebracht wird, und sich relativ zum Gehäuse (31) entlang mit der Verschiebung des Schaltzugs (40) bewegt, und
der Fahrradcomputer (10) darstellen kann:
die Gangposition entsprechend dem Kettenrad, welches verwendet wird; und
mindestens eine Größe aus einer Fahrgeschwindigkeit, einer Fahrzeit, einer Fahrstrecke, einer Durchschnittsgeschwindigkeit und einer maximale Geschwindigkeit des Fahrrads, und der Zeit.

4. Fahrradcomputer (10), welcher an ein Fahrrad angebracht werden kann und von diesem gelöst werden kann, wobei:
der Fahrradcomputer (10) dazu angepasst ist, eine Gangstellung eines Fahrrads basierend auf einem Ausmaß der Verschiebung eines Schaltzugs (40) zu erkennen, gemessen durch einen variablen Resistor, und um die Gangposition anzuzeigen, und
der Fahrradcomputer (10) dazu angepasst ist, einen Spannungsabfall am variablen Resistor (33) in einer Sensorvorrichtung (30), welche an dem Schaltzug (40) des Fahrrads angebracht werden kann und von diesem gelöst werden kann, in eine Gangposition des Fahrrads umzuwandeln, und um eine Gangposition entsprechend einem Kettenrad, welches unter einer Vielzahl von Kettenrädern (4) verwendet wird, zu berechnen, basierend auf einem Ausmaß der Verschiebung des Schaltzugs (40), welche durch den variablen Resistor (33) gemessen ist, und um die Gangposition anzuzeigen;
**dadurch gekennzeichnet, dass**:
der Fahrradcomputer (10) eine Kalibrierfunktion aufweist; und
die Kalibrierfunktion das Speichern des entsprechenden Spannungsabfalls am variablen Resistor (33) entsprechend einem der Vielzahl von Kettenrädern (4) umfasst.

## Revendications

1. Dispositif de détection de position d'engrenage qui détecte une position d'engrenage d'un vélo avec un câble de changement de vitesse (40) et affiche la position d'engrenage, comprenant :
un dispositif de capteur (30) qui peut être attaché audit câble de changement de vitesse (40) dudit vélo et en être détaché, et détecte une quantité de déplacement dudit câble de changement de vitesse (40) avec une résistance variable (33) ; et
un ordinateur de vélo (10) qui peut être attaché audit vélo et en être détaché, dans lequel ledit ordinateur de vélo (10) est adapté pour calculer une position d'engrenage correspondant à un pignon utilisé parmi une pluralité de pignons (4), sur la base de la quantité de déplacement dudit câble de changement de vitesse (40) détectée par ledit dispositif de capteur (30), et pour afficher la position d'engrenage,
ledit ordinateur de vélo (10) est adapté pour convertir une baisse de tension dans ladite résistance variable (33) en une position d'engrenage dudit vélo,
dans lequel
ledit dispositif de capteur (30) comporte :
un logement (31) ;
ladite résistance variable (33) accueillie dans ledit logement (31) ; et
un bras (32) qui est attaché à ladite résistance variable (33), possède une partie d'engagement avec laquelle ledit câble de changement de vitesse (40) est amené en engagement, et se déplace par rapport audit logement (31) avec le déplacement dudit câble de changement de vitesse (40) ;
**caractérisé en ce que** :
ledit ordinateur de vélo (10) a une fonction d'étalonnage ; et
ladite fonction d'étalonnage comprend le stockage de la baisse de tension respective à travers ladite résistance variable (33) correspondant à chacun de ladite pluralité de pignons (4).

2. Dispositif de détection de position d'engrenage selon la revendication 1, dans lequel ledit ordinateur de vélo (10) peut afficher :
la position d'engrenage correspondant au pignon utilisé ; et
au moins un parmi une vitesse de course, un temps de course, une distance de course, une vitesse moyenne et une vitesse maximale dudit vélo, et l'heure.

3. Dispositif de détection de position d'engrenage selon la revendication 1, dans lequel ledit dispositif de capteur (30) comporte :
un logement (31) ;
ladite résistance variable (33) accueillie dans ledit logement (31) ; et
un bras (32) qui est attaché à ladite résistance variable (33), possède une partie d'engagement avec laquelle ledit câble de changement de vitesse (40) est amené en engagement, et se déplace par rapport audit logement (31) avec le déplacement dudit câble de changement de vitesse (40), et
ledit ordinateur de vélo (10) peut afficher :
la position d'engrenage correspondant au pignon utilisé ; et
au moins un parmi une vitesse de course, un temps de course, une distance de course, une vitesse moyenne et une vitesse maximale dudit vélo, et l'heure.

4. Ordinateur de vélo (10) qui peut être attaché à un vélo et en être détaché, dans lequel :
ledit ordinateur de vélo (10) est adapté pour détecter une position d'engrenage d'un vélo sur la base de la quantité de déplacement d'un câble de changement de vitesse (40) détectée par une résistance variable et pour afficher la position d'engrenage, et
ledit ordinateur de vélo (10) est adapté pour convertir, en une position d'engrenage dudit vélo, une baisse de tension à travers la résistance variable (33) dans un dispositif de capteur (30) qui peut être attaché audit câble de changement de vitesse (40) dudit vélo et en être détaché, et pour calculer une position d'engrenage correspondant à un pignon utilisé parmi une pluralité de pignons (4), sur la base d'une quantité de déplacement dudit câble de changement de vitesse (40) détectée par ladite résistance variable (33), et pour afficher la position d'engrenage ;
**caractérisé en ce que** :
ledit ordinateur de vélo (10) a une fonction d'étalonnage ; et
ladite fonction d'étalonnage comprend le stockage de la baisse de tension respective à travers ladite résistance variable (33) correspondant à chacun de ladite pluralité de pignons (4).
